# EUROPÄISCHE PATENTANMELDUNG

(11) **EP 1 998 022 A2**
(43) Veröffentlichungstag der Anmeldung: **03.12.2008**
(21) Anmeldenummer: 08009621.7
(22) Anmeldetag: 27.05.2008
(51) Int. Cl.: F02B 29/00

(54) **Anordnung von Aufladebaueinheiten zum Aufladen einer Verbrennungskraftmaschine**

(30) Priorität: 29.05.2007 DE 102007025173
(71) Anmelder: Behr GmbH & Co. KG, 70469 Stuttgart (DE)
(72) Erfinder: Wegner, Jürgen, 73054 Eislingen/Fils (DE)

(57) **Zusammenfassung**

Die Erfindung geht aus von einer im Bauraum eines Kraftfahrzeugs anzubringenden Anordnung von Aufladebaueinheiten (1, 5, 6, 7) zum Aufladen einer Verbrennungskraftmaschine mit einem eine Ladeluft und/oder ein Abgas umfassenden Fluid (23), wobei die Aufladebaueinheiten (1, 5, 6, 7) wenigstens einen Wärmetauscher (5, 6, 7) und wenigstens einen Kompressor (1) umfassen. Gemäß dem Konzept der Erfindung sind die Aufladebaueinheiten (1, 5, 6, 7) in einem Modul (10A, 10B) zusammengefasst angeordnet und zum Zusammenhalten derselben im Modul (10A, 10B) sind die Aufladebaueinheiten (1, 5, 6, 7) jedenfalls teilweise miteinander fluidführend verbunden und wenigstens eine der Aufladebaueinheiten (1, 5, 6, 7) ist an einer Haltekonstruktion gehalten. Dadurch wird ein flexibles, einfaches und dennoch Bauraum und Verbindungsaufwand sparendes Handhaben der Aufladebaueinheiten ermöglicht. Die Erfindung führt auch auf ein Herstellungsverfahren.

## Beschreibung

Die Erfindung betrifft eine Anordnung von Aufladebaueinheiten zum Aufladen einer Verbrennungskraftmaschine mit einem eine Ladeluft und/oder ein Abgas umfassenden Fluid, wobei die Aufladebaueinheiten wenigstens einen Wärmetauscher und wenigstens einen Kompressor umfassen.

In zunehmendem Maße werden bauraumsparende und Verbindüngsaufwand geringhaltende modulare Lösungen im Rahmen der Abgasrückführung oder Ladeluftzuführung realisiert. Bisher zum Teil unabhängige Positionierungen einzelner Bauteile eines Abgasrückführsystems oder eines Ladeluftzuführsystems erfordern in der Regel auch einen erhöhten Montageaufwand bei der Motorendfertigung. Zum Teil sind die unabhängigen Positionen vergleichsweise weit entfernt, so dass dies Nachteile hinsichtlich der Betriebs-oder der Herstellungskosten mit sich bringen kann. Beispielsweise sind einzelne Aufladebaueinheiten der eingangs genannten Art vergleichsweise weit entfernt voneinander über den Motorraum in der Umgebung einer Verbrennungskraftmaschine verteilt und, z.B. über Rohr- oder Schlauchverbindungen, miteinander fluidführend verbunden. Zur Montage werden die Aufladebaueinheiten in der Regel einzeln in den Bauraum eingepasst - eine Abstimmung der Gesamtanordnung der Aufladebaueinheiten bezüglich einer Strömungs- oder Leitungsoptimierung ist ebenso wie eine thermodynamische und konstruktionstechnische Abstimmung nur in begrenztem Maße möglich. Regelmäßig erfolgt eine Anlieferung an den Endmontageplatz von unterschiedlichen Herstellern - dies macht eine Qualitätsprüfung, insbesondere hinsichtlich der Verbindungstechnik beim Endmontageplatz erforderlich.

Ein bekannter Ansatz, derartige Probleme zu vermindern, ist aus EP 1 643 097 A1 bekannt, in der ein multifunktionales Modul offenbart ist, das Funktionen der Abgaskühlung und eine Regulierung der Abgaskühlung integriert und an dem ein Wärmetauscher anbringbar ist.

Eine Auslegung eines solchen Moduls hat regelmäßig im Hinblick auf eine vergleichsweise konkrete Bauraumsituation zu erfolgen. Wünschenswert wäre eine Lösung, welche die oben genannte Problematik im Rahmen eines flexibleren Ansatzes löst.

An dieser Stelle setzt die Erfindung an, deren Aufgabe es ist, eine Vorrichtung anzugeben, die ein bauraumsparendes und mit vergleichsweise reduziertem Verbindungsaufwand versehenes und dennoch flexibles Handhaben der Aufladung einer Verbrennungskraftmaschine mit einem eine Ladeluft und/oder einem Abgas umfassenden Fluid ermöglicht. Aufgabe der Erfindung ist es auch, ein dafür geeignetes Abgasrückführ- und/oder Ladeluftzuführsystem für eine Verbrennungskraftmaschine und eine entsprechende Verbrennungskraftmaschine anzugeben. Aufgabe der Erfindung ist es weiter, ein bauraumsparendes und ein vergleichsweise, insbesondere hinsichtlich des Verbindungsaufwands und Montageaufwands, vereinfachtes und gleichwohl sicheres Herstellungsverfahren für ein Abgasrückführsystem und/oder ein Ladeluftzuführsystem anzugeben.

Betreffend die Vorrichtung wird die Aufgabe durch die Erfindung mit einer Anordnung von Aufladebaueinheiten der eingangs genannten Art gelöst, bei der erfindungsgemäß die Aufladebaueinheiten in einem Modul zusammengefasst angeordnet sind und zum Zusammenhalten derselben im Modul die Aufladebaueinheiten jedenfalls teilweise miteinander fluidführend verbunden sind und wenigstens eine der Aufladebaueinheiten an einer Haltekonstruktion gehalten ist.

Die Erfindung hat erkannt, dass die zusammenfassende Anordnung der Aufladebaueinheiten in einem Modul bereits im Vorfeld einer Endmontage, bei- .. spielsweise bei einem Zulieferer, gemäß dem Konzept der Erfindung möglich ist und dadurch nicht nur der Montageaufwand als solcher im Vorfeld der Endmontage reduziert werden kann, sondern darüber hinaus auch ein gesamtlogistischer Aufwand zur ansonsten notwendigen Montage einer Vielzahl von Aufladebaueinheiten, weiteren Einzelkomponenten und dazu gehörigen Befestigungs- und Halterelementen. Diese Situation erweist sich als besonders gravierend bei der Montage von Aufladebaueinheiten und/oder Einzelkomponenten an der Verbrennungskraftmaschine.

Die zusammenfassende Anordnung der Aufladebaueinheiten in einem Modul gemäß dem Konzept der Erfindung erlaubt zum einen eine flexible Zusammenstellung bekannter Aufladebaueinheiten oder leicht modifizierter Aufladebaueinheiten, die im Rahmen bisheriger Entwicklungskonzepte liegen. Mit anderen Worten, die Aufladebaueinheiten können im Rahmen bestehender Lieferkonzepte separat und im Wesentlichen unverändert bereitgestellt werden und dennoch im Modul zusammengefasst werden. Eine speziell ausgelegte und deswegen vergleichsweise unflexible Integration in einer integralen geschlossenen Baueinheit ist nicht notwendig.

Zum anderen wird dennoch auch eine erhebliche Vereinfachung der thermodynamischen und konstruktiven Abstimmung der Aufladebaueinheiten und Komponenten untereinander, insbesondere bereits im Verfügungsbereich eines Zulieferers. Die Erfindung hat erkannt, dass insbesondere im Bereich der Funktionalität einer Ladeluftzuführung und/oder Abgasrückführung eine ausreichende konstruktive und thermodynamische Auslegung im Hinblick auf eine Verbrennungskraftmaschine erfolgen kann, insbesondere bereits vor dem Beginn einer Endmontage. Dies hat zusätzlich den Vorteil, dass eine konstruktive Auslegung der Anordnung von Aufladebaueinheiten für einen vergleichsweise geringen Bauraum, beispielsweise durch eine verbesserte Anordnung bzw. Verkürzung von fluidführenden Verbindungen, möglich ist. Zudem kann eine synergetische weitere konstruktive und thermodynamische Auslegung der Gesamtanordnung betreffend die Gesamtfunktionalität einer Ladeluftzuführung und/oder einer Abgasrückführung bereits vor einer Endmontage so erfolgen, dass die Aufladebaueinheiten im Modul zusammengehalten werden. Dazu sieht das Konzept der Erfindung ebenfalls vor, dass die Aufladebaueinheiten jedenfalls teilweise miteinander fluidführend verbunden sind und wenigstens eine der Aufladebaueinheiten an einer Haltekonstruktion gehalten ist.

Dementsprechend führt das Konzept der Erfindung auf eine Verwendung der Anordnung der oben erläuterten Art zur Anbringung, vorzugsweise direkt, an der Verbrennungskraftmaschine, insbesondere auf einer einzigen Seite der Verbrennungskraftmaschine. Vorzugsweise kann eine Anbringung mehrerer Module vorgesehen sein, beispielsweise eines Moduls ausschließlich für eine Ladeluftzuführung auf einer ersten Seite der Verbrennungskraftmaschine und eines weiteren Moduls ausschließlich zur Abgasrückführung auf einer weiteren Seite der Verbrennungskraftmaschine.

Die Erfindung führt auch auf ein entsprechendes Abgasrückführsystem für eine Verbrennungskraftmaschine, aufweisend eine Abgasrückführung, einen Kompressor und eine Anordnung gemäß dem Konzept der Erfindung.

Die Erfindung führt auch auf ein Ladeluftzuführsystem für eine Verbrennungskraftmaschine, aufweisend eine Ladeluftansaugung, einen Luftfilter, einen Kompressor und eine Anordnung gemäß dem Konzept der Erfindung.

Das Konzept der Erfindung führt entsprechend auf eine Verbrennungskraftmaschine mit der erfindungsgemäßen Anordnung und/oder einem erfindungsgemäßen System.

Betreffend das Verfahren wird die Aufgabe durch die Erfindung mit einem Herstellungsverfahren der eingangs genannten Art gelöst, das erfindungsgemäß die Schritte aufweist:
- Bereitstellen einer Anordnung von Aufladebaueinheiten zum Aufladen einer Verbrennungskraftmaschine mit einem eine Ladeluft und/oder ein Abgas umfassenden Fluid, wobei die Aufladebaueinheiten wenigstens einen Wärmetauscher und wenigstens einen Kompressor umfassen;
- zusammenfassende Anordnung der Aufladebaueinheiten in einem Modul, wobei dieselben im Modul zusammengehalten werden, indem die Aufladebaueinheiten und jedenfalls teilweise miteinander fluidführend verbunden werden und wenigstens eine der Aufladebaueinheiten an einer Haltekonstruktion angebracht wird.

Das Herstellungsverfahren gemäß dem Konzept der Erfindung erlaubt eine Kombination der Aufladebaueinheiten sowie weiterer Einzelkomponenten und Verbindungsteile unter vergleichsweise geringem Aufwand und ermöglicht eine Optimierung einer konstruktiven und thermodynamischen Auslegung. Beispielsweise ist eine Optimierung des Bauraumbedarfs, einer Verbindungslänge der insbesondere fluidführenden Teile oder der bevorzugten Anordnung des Moduls auf einer bevorzugten Motorseite möglich, gegebenenfalls unter Berücksichtigung der Funktionalität der im Modul zusammengestellten Aufladebaueinheiten, Es können auch mehrere Module - zur Anordnung auf unterschiedlichen Motorseiten zur Verfügung gestellt werden.

Durch diese Art der Optimierungsmöglichkeiten ergibt sich insgesamt ein erhebliches Verbesserungspotential für einen Motorenergieverbrauch, insbesondere für einen Oberflächenverbrauch am Motor.

Das erfinderische Konzept des Herstellungsverfahrens ermöglicht es, insbesondere die Verfahrensschritte bereits beim Zulieferer oder beim Automobilhersteller auf einen Vormontageplatz auszuführen. Die Herstellung des Moduls durch zusammenfassende Anordnung und fluidführende und - für den Transport geeignete - haltende Verbindung der Aufladebaueinheiten als solches ist erheblich einfacher, da die Zugänglichkeit des Moduls als solches einfacher ist als die Zugänglichkeit einzelner Aufladebaueinheiten im Motor-raum.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung, sowie hinsichtlich weiterer Vorteile zu realisieren.

Im Rahmen des Konzepts der Erfindung können in dem Modul genau ein Wärmetauscher und genau ein Kompressor zusammengefasst angeordnet sein. Vorzugsweise kann im Rahmen einer Abwandlung, ebenfalls dem Konzept der Erfindung folgend, auch eine Anzahl von Wärmetauschem, beispielsweise zwei Ladeluftkühler und ein Abgaskühler, und gegebenenfalls eine Anzahl von Kompressoren, beispielsweise Hochdruck- und Niederdruckturbinen, als wichtigste Aufladebaueinheiten in dem Modul zusammengefasst angeordnet sein. Gemäß einer besonders bevorzugten Weiterbildung der Erfindung ist in dem Modul wenigstens ein Wärmetauscher mit wenigstens einem Kompressor fluidführend verbunden. Vorzugsweise sind alle Aufladebaueinheiten miteinander fluidführend verbunden.

Insbesondere können die Aufladebaueinheiten derart angeordnet sein, dass sie in Einbaulage Teil eines Ladeluftzuführsystems oder eines Abgasrückführsystems sind - sie können auch derart angeordnet sein, dass sie in Einbaulage Teil eines Ladeluftzuführsystems und Abgasrückführsystems sind. So ist es beispielsweise möglich, eine Anordnung vorzusehen, bei der wenigstens ein Wärmetauscher im Form eines Ladetuftwärmetauschers, insbesondere eines Zwischenkühlers und eines Hochdruckkühlers, gebildet ist. Vorzugsweise kann ein Wärmetauscher auch in Form eines Abgaswärmetauschers, insbesondere -kühlers gebildet sein. Im Rahmen einer besonders bevorzugten Weiterbildung kann ein erster und ein zweiter Wärmetauscher vorgesehen sein, wobei der erste Wärmetauscher in Form eines Ladeluftwärmetauschers und der zweite Wärmetauscher in Form eines Abgaswärmetauschers gebildet ist. Entsprechend kann auch ein Kompressor einem Ladeluftzuführsystem und/oder einem Abgasrückführsystem d.h. ggf. auch sowohl als Teil eines Ladeluftzuführsystems und Abgasrückführsystems in Kombination zugeordnet sein.

Andere als die hier genannten Weiterbildungen der Erfindung können im Rahmen des Konzepts je nach Bedarf flexibel vorgesehen sein, soweit es der Verwendungszweck erforderlich macht - wie oben erläutert, erweist sich das Konzept der Erfindung als besonders flexibel betreffend die Zusammenstellung der Aufladebaueinheiten in einem Modul. Im Rahmen einer ganz besonders bevorzugten Weiterbildung der Erfindung sind zwei Ladeluftwärmetauscher, ein Abgaswärmetauscher und ein Abgasturbolader, insbesondere ein Hochdruck- und Niederdruckturbolader, mit entsprechenden Luftverdichtern als Aufladebaueinheiten in dem Modul zusammengefasst angeordnet, wobei der Abgaswärmetauscher und der Abgasturbolader miteinander fluidführend verbunden sind. Vorzugsweise sind im Modul auch Kühlmittel, wie z. B. Kühlleitungen und/oder eine Kühlplatte, angeordnet.

Vorzugsweise ist die Anordnung direkt an der Verbrennungskraftmaschine anbringbar. Insbesondere dazu weist wenigstens eine der Aufladebäueinheiten, insbesondere wenigstens ein Wärmetauscher, einen fluidführenden Anschluss an die Verbrennungskraftmaschine auf. Ebenso vorteilhaft weist wenigstens eine der Aufladebaueinheiten einen Befestigungsanschluss zur Befestigung des Moduls an der Verbrennungskraftmaschine auf. Gemäß dieser oder der zuvor genannten Weiterbildung der Erfindung kann die Anordnung mit besonders geringem Aufwand direkt an einer Verbrennungskraftmaschine befestigt und fluidführend angeschlossen werden.

Gemäß einer besonders bevorzugten Weiterbildung der Erfindung ist wenigstens eine der Aufladebaueinheiten an der Haltekonstruktion zur Positionsfestlegung der Aufladebaueinheit im Modul und/oder in Einbaulage gehalten. Es hat sich gezeigt, dass die Anordnung jedenfalls teilweise miteinander verbundene, insbesondere gemäß dem Konzept der Erfindung, ebenfalls teilweise miteinander fluidführend verbundene Aufladebaueinheiten aufweisen kann. Derartige Verbindungen garantieren nicht in jedem Fall eine beispielsweise zum Transport des Moduls notwendige strukturelle Integrität, welche aber mittels der Haltekonstruktion, insbesondere des Rahmens hergestellt ist. Darüber hinaus kann es vorteilhaft sein, für die Anordnung auch Aufladebaueinheiten in dem Modul zusammengefasst anzuordnen, die nicht mit anderen Aufladebaueinheiten des Moduls verbunden sind. Insbesondere Aufladebaueinheiten der zuvor genannten Art können unter Verwendung der Haltekonstruktion gemäß der oben genannten Weiterbildung in ihrer Position relativ zu den weiteren Aufladebaueinheiten im Modul in ihrer Position festgelegt sein. Das Modul lässt sich sicher handhaben, ohne dass eine der Aufladebaueinheiten in ihrer Position verschoben wird. Vielmehr ist gewährleistet, dass alle Aufladebaueinheiten des Moduls so gehalten sind, dass diese beim Einsetzen des Moduls im Motorraum in Einbaulage befindlich sind. Eine Haltekonstruktion kann, zusätzlich oder alternativ zu einem Konstruktionsteil in Form eines Rahmens, ein oder mehrere Konstruktionsteile ausgewählt aus der Gruppe bestehend aus: einer Strebe, einer Stütze, einem Halter, einer Schelle, einem Flansch oder ein sonstiges Befestigungsteil, aufweisen.

Besonders bevorzugte Weiterbildungen des Herstellungsverfahrens gemäß der Erfindung sind den weiteren Unteransprüchen zu entnehmen und geben im Einzelnen vorteilhafte Möglichkeiten an, das oben erläuterte Verfahrenskonzept im Rahmen der Aufgabenstellung, sowie hinsichtlich weiterer Vorteile zu realisieren.

Vorzugsweise wird eine oben erläuterte Haltekonstruktion zur Positionsfestlegung der Aufladebaueinheit im Modul und/oder in Einbaulage an die entsprechenden Aufladebaueinheiten des Moduls angebracht. Dazu weist die Haltekonstruktion, insbesondere ein Rahmen, entsprechende Streben oder Schellen oder Klemmen oder sonstige Aufnahmen auf, denen ein entsprechendes Konstruktionsmerkmal einer Aufladebaueinheit zugeordnet ist, beispielsweise ein Stutzen, eine Strebe, eine Stange der Aufladebaueinheit oder dgl. Eine Aufladebaueinheit kann direkt oder indirekt an der hlaltekonstruktion gehalten sein.

Die Anordnung gemäß dem Konzept der Erfindung kann mit der Haltekonstruktion - vorzugsweise und gegebenenfalls mittels des Rahmens oder mittels am Rahmen angebrachter Trag- oder Hebehilfen - in einem weiteren. Verfahrensschritt von einem Vormontageplatz zu einem Endmontageplatz transportiert werden. Vorzugsweise befindet sich der Endmontageplatz bei einem Automobilhersteller. Ein Vormontageplatz kann bei einem Zulieferer angeordnet sein oder beim Automobilhersteller, getrennt vom Endmontageplatz. In beiden Fällen ist es möglich, am Vormontageplatz bessere Bedingungen zur Vormontage des Moduls zur Verfügung zu stellen - das Modul ist entweder an sich oder durch Anbringung des zuvor erläuterten Rahmens für den Transport in seiner Integrität gesichert.

In einem weiteren Verfahrensschritt wird das Modul vorzugsweise zunächst neben der Verbrennungskraftmaschine bereitgestellt und dann an der Verbrennungskraftmaschine angebracht.

In bevorzugter Weise kann der Rahmen vor Anbringen des Moduls an der Verbrennungskraftmaschine abgenommen werden - bei geeigneter. Gestaltung des Rahmens kann dieser jedoch auch mit dem Modul verbaut und im Motorraum verbleiben. Gemäß dieser Weiterbildung weist die Anordnung gemäß dem Konzept der Erfindung vorzugsweise einen nicht-fluidführenden - also ausschließlich der Stütz- und Transportfunktion dienenden - Rahmen auf, an welchem wenigstens eine der Aufladebaueinheiten gehalten ist.

In einem weiteren besonders bevorzugten Verfahrensschritt kann die erste Anordnung von Aufladebaueinheiten zum Aufladen einer Verbrennungskraftmaschine ausschließlich für eine Ladeluft ausgebildet sein und insgesamt auf einer ersten Seite der Verbrennungskraftmaschine angeordnet sein.

In einem weiteren Verfahrensschritt kann eine zweite Anordnung von Aufladebaueinheiten, vorzugsweise ausschließlich zum Aufladen einer Verbrennungskraftmaschine mit einem Abgas ausgebildet sein und auf einer zweiten, gleichen oder anderen, Seite der Verbrennungskraftmaschine angeordnet sein. D.h., es können beispielsweise zwei einzelne Module - gegebenenfalls mit unterschiedlicher Funktionalität, beispielsweise einerseits zur Ladeluftzuführung und andererseits zur Abgasrückführung - geliefert werden und z.B. an einer ersten Abgasseite des Motors bzw. an einer zweiten Ladeluftseite des Motors angebracht sein.

Ausführungsbeispiele der Erfindung werden nun nachfolgend anhand der Zeichnung im Vergleich zum Stand der Technik, welcher zum Teil ebenfalls dargestellt ist, beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Vorteilhaft ist, dass eine Haltekonstruktion ein Aufhänge- und/oder ein Tragmittel aufweist.

Vorteilhaft ist, dass eine Haltekonstruktion ein oder mehrere Konstruktionsteile ausgewählt aus der Gruppe bestehend aus: eine Strebe, eine Stütze, einen Halter, eine Scholle, einen Flansch, oder ein sonstiges Befestigungsteil; aufweist.

Vorteilhaft ist, dass wenigstens eine der Aufladebaueinheiten an einem Befestigungsteil zur Befestigung des Moduls an der Verbrennungskraftmaschine gehalten ist.

Vorteilhaft ist, dass wenigstens eine der Aufladebaueinheiten an der Haltekonstruktion zur Positionsfestlegung der Aufladebaueinheit im Modul und/oder in Einbaulage gehalten ist.

Vorteilhaft ist die Verwendung wenigstens einer Anordnung zur Anbringung direkt an der Verbrennungskraftmaschine, insbesondere einer ersten Anordnung von Aufladebaueinheiten zum Aufladen einer Verbrennungskraftmaschine mit einer Ladeluft auf einer ersten Seite der Verbrennungskraftmaschine und/oder einer zweiten Anordnung von Aufladebaueinheiten zum Auf laden einer Verbrennungskraftmaschine mit einem Abgas auf einer zweiten, gleichen oder anderen, Seite der Verbrennungskraftmaschine.

Vorteilhaft ist ein Abgasrückführsystem für eine Verbrennungskraftmaschine, aufweisend eine Abgasrückführung, einen Kompressor und gekennzeichnet durch eine Anordnung.

Vorteilhaft ist das Ladeluftzuführsystem für eine Verbrennungskraftmaschine, aufweisend eine Ladeluftansaugung, einen Luftfilter und einen Kompressor.

Vorteilhaft ist eine Verbrennungskraftmaschine mit einer Anordnung und/oder einem System.

Vorteilhaft ist ein Verfahren zur Herstellung eines Systems, aufweisend die Schritte:
- Bereitstellen einer Anordnung von Aufladebaueinheiten zum Aufladen einer Verbrennungskraftmaschine mit einem eine Ladeluft und/oder ein Abgas umfassenden Fluid wobei die Aufladebaueinheiten wenigstens einen Wärmetauscher und wenigstens einen Kompressor umfassen,
- Zusammenfassende Anordnung der Aufladebaueinheiten in einem Modul, wobei dieselben im Modul zusammengehalten werden, indem die Aufladebaueinheiten jedenfalls teilweise miteinander fluidführend verbunden werden und an wenigstens einem der Aufladebaueinheiten, eine Haltekonstruktion angebracht wird.

Vorteilhaft ist ein Verfahren, welches einen oder mehrere der Schritte aufweist:
- Anbringen der Haltekonstruktion zur Positionsfestlegung der Aufladebaueinheit im Modul und/oder in Einbaulage
- Transportieren des Moduls von einem Vormontageplatz zu einem Endmontageplatz
- Bereitstellen des Moduls neben der Verbrennungsmaschine
- Anbringen des Moduls an der Verbrennungsmaschine.

Vorteilhaft ist ein Verfahren, gekennzeichnet durch Abnehmen des Rahmens.

Vorteilhaft ist ein Verfahren, gekennzeichnet durch Verbleiben des Rahmens in Anbringungslage des Moduls

Vorteilhaft ist ein Verfahren, welches einen oder mehrere der Schritte aufweist:
- Anbringen einer ersten Anordnung von Aufladebaueinheiten zum Aufladen einer Verbrennungskraftmaschine mit einer Ladeluft auf einer ersten Seite der Verbrennungskraftmaschine
- Anbringen einer zweiten Anordnung von Aufladebaueinheiten zum Aufladen einer Verbrennungskraftmaschine mit einem Abgas auf einer zweiten, gleichen oder anderen, Seite der Verbrennungskraftmaschine.

Im Einzelnen zeigt die Zeichnung in:
- Fig. 1: eine perspektivische Ansicht eines Ladeluftzuführsystems mit vereinzelten Aufladebaueinheiten, gemäß dem Stand der Technik;
- Fig. 2: eine perspektivische Ansicht eines Abgasturboladers mit einem Ladeluftzwischenkühler zur Anordnung in einem Modul gemäß einer ersten besonders bevorzugten Ausführungsform der Erfindung;
- Fig. 3: die Anordnung von Fig. 2 mit einem Hochdruckladeluftkühler und einem Abgaskühler;
- Fig. 4: eine perspektivische Ansicht einer Anordnung von Aufladebaueinheiten in einem Modul mit einer Haltekonstruktion gemäß der ersten besonders bevorzugten Ausführungsform der Erfindung;
- Fig. 5: eine motorseitige Seitenansicht der Anordnung von Fig. 4;
- Fig. 6: eine perspektivische Ansicht eines weiteren Abgasturboladers mit einem Ladeluftzwischenkühler zur Anordnung in einem Modul gemäß einer zweiten besonders bevorzugten Ausführungsform der Erfindung;
- Fig. 7: eine perspektivische Ansicht einer Anordnung von Aufladebaueinheiten in einem Modul mit einer weiteren Haltekonstruktion gemäß der zweiten besonders bevorzugten Ausführungsform der Erfindung;
- Fig. 8: eine motorseitige Seitenansicht der Anordnung von Fig. 7.

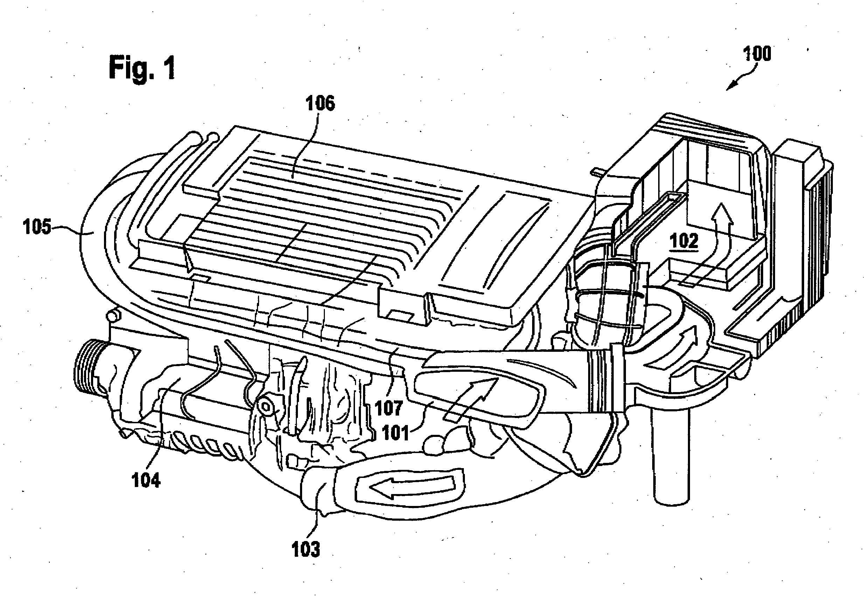

Fig. 1 zeigt eine bekannte Anordnung zur Kompressoraufladung 100 zur Verdeutlichung eines beispielhaften Einzelfalls gemäß dem die Einzelkomponenten und die zugehörige Verbindungstechnik gemäß der konkreten Bauraumsituation im Motorraum vergleichsweise weit voneinander über den Motorraum verteilt angeordnet sind. Die Anordnung zur Kompressoraufladung 100 umfasst vorliegend eine Luftansaugung 101, über welche die mit Pfeilen dargestellte Ladeluft über einen ersten Verbindungsweg einem Luftfilter 102 zugeführt und von dort über eine Eintrittsverbindung 103 einem Kompressor 104 zugeführt wird. Ausgangsseitig des Kompressors 104 wird über eine weitere Eintrittsverbindung 105 die komprimierte und dadurch erhitzte Ladeluft einem Ladeluftkühler 106 zugeführt, welcher unmittelbar über der Verbrennungskraftmaschine angeordnet ist und von dem aus die gekühlte Ladeluft im komprimierter Form einer Eintrittsverbindung 107 zur Verteilung auf die Zylinder zugeführt wird.

Zur Herstellung einer solchen Anordnung zur Kompressoraufladung 100 müssen die einzelnen Komponenten 101 bis 107 einzeln am Montageplatz angeliefert und dort nacheinander an bzw. um den Motor herum befestigt und miteinander verbunden werden. Die Dichtheit der Verbindungsstellen ist nach der Montage am Endmontageplatz zu prüfen.

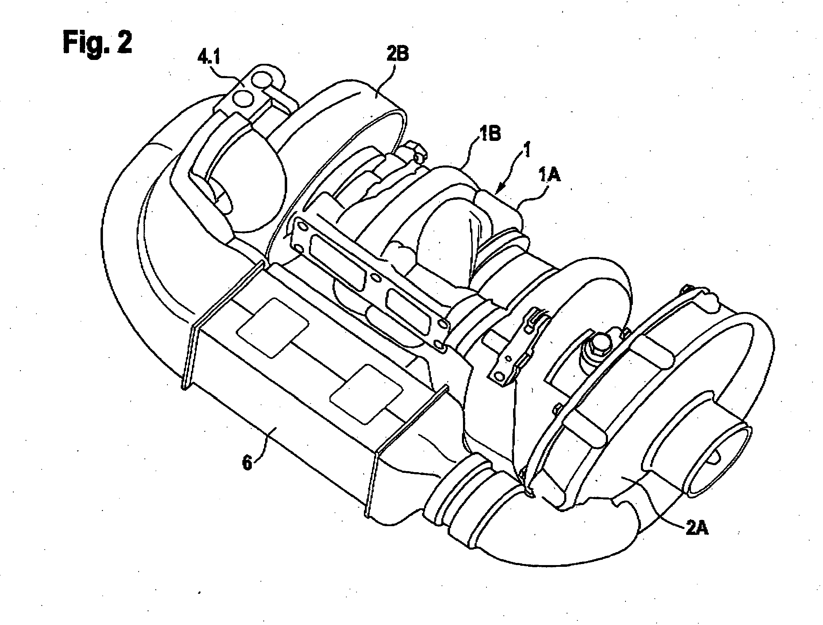

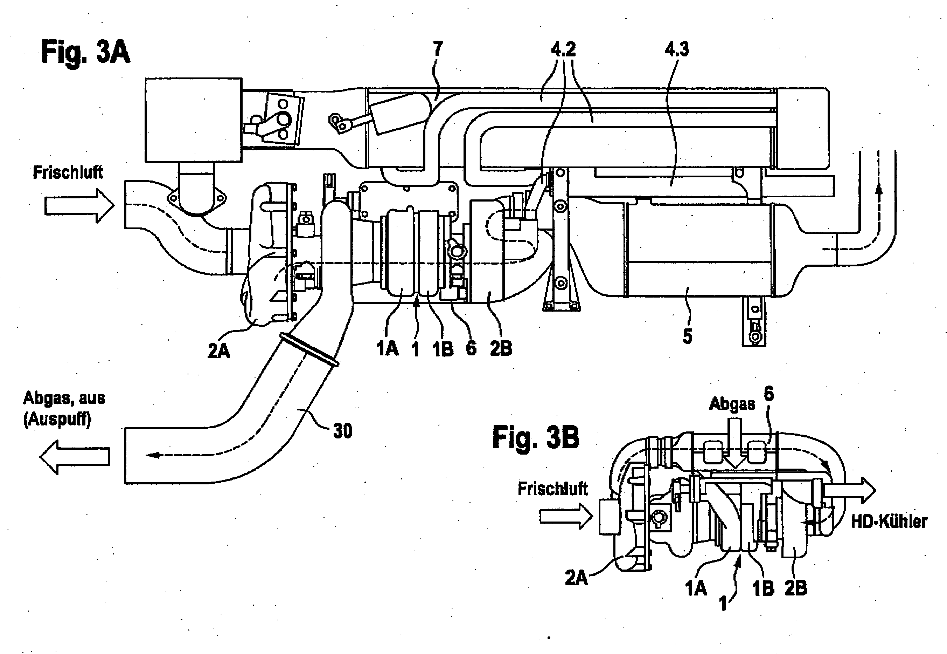

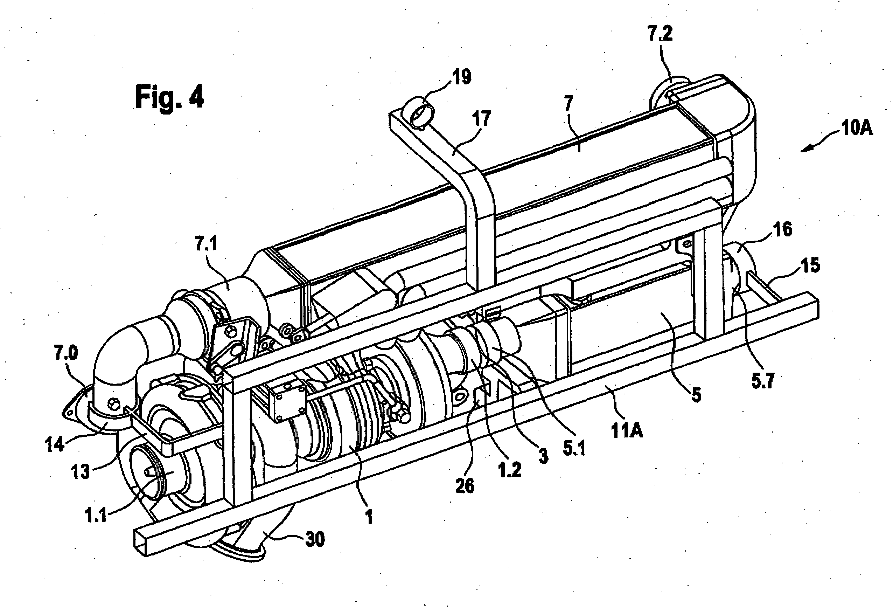

Fig. 2 zeigt eine Bauanordnung eines Abgasturboladers 1, der zur Anordnung in einem Modul gemäß einer ersten Ausführungsform der Erfindung wie in Fig. 4 dargestellt, vorgesehen ist. Der Abgasturbolader 1 weist eine in Fig. 3B näher bezeichnete mit Abgas zu beschickende Axialturbine auf, die in Form eines Niederduckturboladers 1A zum Antrieb eines Ladeluftniederdruckverdichters 2A und einem Hochdruckturbolader zum Antrieb eines Ladelufthochdruckverdichters 2B gebildet ist. Der Ladelufthochdruckverdichter ist als Radialverdichter ausgeführt. Die Bauanordnung weist darüber hinaus einen zur Ladeluftkühlung vorgesehenen Wärmetauscher 6 in Form eines Zwischenkühlers auf. Die Bauanordnung der Fig. 2 ist in der aus Fig. 3A und Fig. 3B näher ersichtlichen Weise zum Ansaugen von Frischluft über den Niederdruckverdichter 2A ausgelegt, wobei der Niederdruckverdichter 2A von dem Niederdruckturbolader 1A angetrieben ist. Die so verdichtete Frischluft wird über den Zwischenkühler 6 geführt und in gekühlter Form dem Hochdruckverdichter 2B zugeführt, welcher über den Hochdruckturbolader angetrieben wird. Die so hochdruckverdichtete Ladeluft wird in der aus Fig. 3A ersichtlichen Weise einem weiteren Wärmetauscher 5, vorliegend in Form eines Hochdruckladeluftkühlers zugeführt, um in gekühlter Form als Ladeluft einer Verbrennungsmaschine zugeführt zu werden.

Die Bauanordnung der Fig. 2 weist darüber hinaus einen Kühlmittelanschluss 4.1 auf, über welchen Kühlmittel in entsprechenden Kühlmitteilleitungen 4.2 unter anderem einer Kühlmittelplatte 4.3 zur Kühlung der Wärmetauscher 5, 6, 7 in der aus Fig. 3A ersichtlichen Weise zuführbar ist.

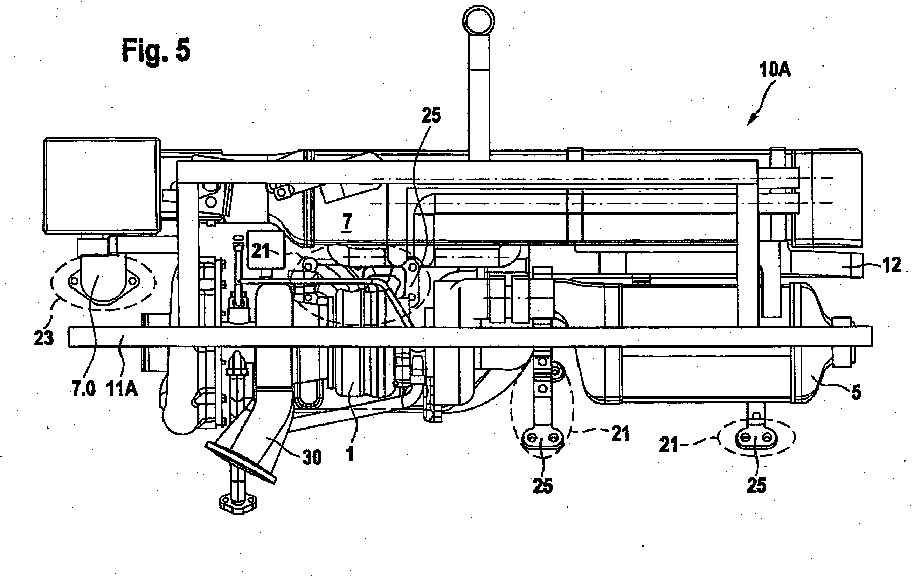

Fig. 4 und Fig. 5 zeigt eine besonders bevorzugte Anordnung der in Fig. 2 und Fig. 3 beschriebenen Aufladebaueinheiten, die in einem Modul 10A zusammengefasst mit einer Haltekonstruktion angeordnet sind. Das Modul 10A weist vorliegend einen Kompressor 1 mit einem Eingangsstutzen 1.1 für Ladeluft in Form eines Hochdruck- und Niederdruckturboladers, auf, welcher außer mit dem Wärmetauscher ausgangsseitig, über einen einer Verbindungsstelle 3 zugeordneten Ausgangsstutzen 1.2 direkt an einen Eingangsstutzen 5.1 eines Wärmetauschers 5, vorliegend in Form eines Hochdruckladeluftkühlers, angeschlossen ist. Als weitere, nicht direkt mit den zuvor genannten Aufladebaueinheiten verbundene Aufladebaueinheit, ist ein weiterer Wärmetauscher 7 in Form eines Abgaskühlers im Modul 10A mit den vorgenannten Aufladebaueinheiten zusammen angeordnet. Der weitere Wärmetauscher 7 weist einen fluldführenden, eingangsseitigen Eingangsstutzen 7.1 und einen ausgangsseitigen Ausgangsstutzen 7.2 für Abgas auf.

Zur positionsrichtigen Festlegung der Aufladebaueinheiten 1, 5, 7 in Bezug auf ihre spätere Einbaulage im Motorraum ist im Modul 10A ein Rahmen 11A integriert, welcher zudem die konstruktive Stabilität des Moduls 10A sichert. Der Rahmen weist dazu eine erste Strebe 13 und eine zweite Strebe 15 auf, welche jeweils über eine erste Ringaufnahme 14 bzw. eine zweite Ringaufnahme 16 geeignete Teile der Aufladebaueinheiten aufnehmen. Vorliegend ist in der Ringaufnahme 14 ein Teil des eingangsseitigen Stutzens 7.1 des weiteren Wärmetauschers 7 aufgenommen, welcher andemends durch in Fig. 5 besser zu erkennende Befestigungsanordnungen 12 am ersten Wärmetauscher 5 aufliegt und gehalten ist. Der erste Wärmetauscher 5 wiederum ist mit seinem ausgangsseitigen Stutzen in der zweiten Ringaufnahme 16 aufgenommen und über die Strebe 15 am Rahmen 11A gehalten. Der Rahmen 11A weist zudem eine Transportvorrichtung 17 auf, welche vorliegend als eine henkelartige sowohl zum Griff als auch zur Aufhängung geeignete L-förmige Fortsetzung gebildet ist, die endseitig eine Öse 19 aufweist, an der wiederum weitere Befestigungs- oder Transportmittel, beispielsweise ein Seil, Haken oder dgl. angebracht werden können.

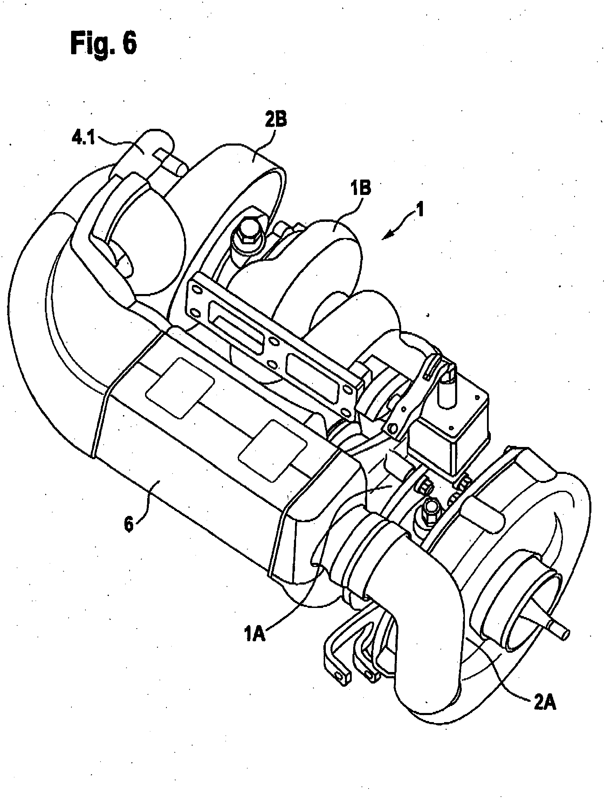

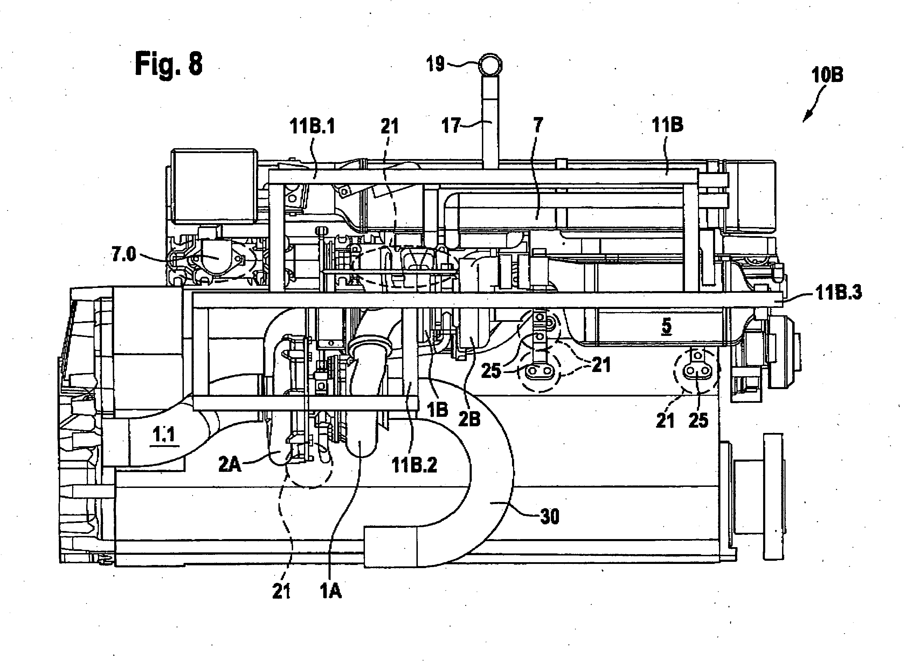

Fig. 6 bis Fig. 8 beziehen sich auf eine zweite besonders bevorzugte Ausführungsform der Erfindung.

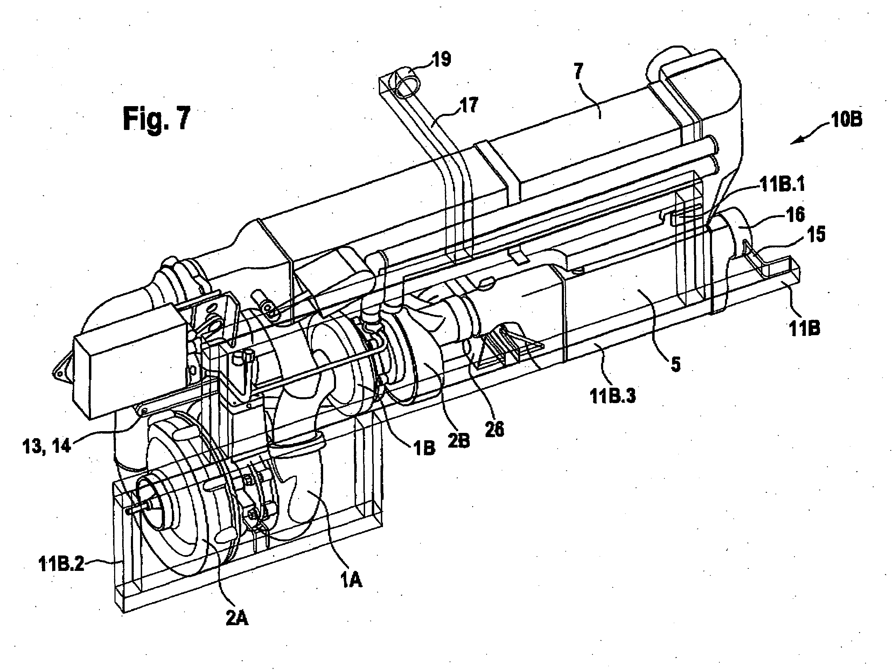

Dazu zeigt Fig. 6 eine zu Fig. 2 abgewandelte Bauanordnung eines Abgasturboladers, bei dem der Einfachheit halber Teile mit gleicher Funktion mit gleichen Bezugszeichen versehen sind. Im Unterschied zu Fig. 2, gemäß der der Ladeluftniederdruckverdichter als Radialverdichter gebildet ist, ist vorliegend in der aus Fig. 7 weiter verdeutlichten Weise der Ladeluftniederdruckverdichter in abgewandelter Form über den Niederdruckturbolader 1A angetrieben. Die in Fig. 6 gezeigte Bauanordnung ist - ähnlich wie in Fig. 4 - dargestellt, wiederum mit einem weiteren Wärmetauscher 5 in Form eines Hochdruckkühlers und einem weiteren Wärmetauscher 7 in Form eines Abgaskühlers zusammen in einem Modul 10B in der oben erläuterten Weise fluidführend miteinander verbunden angeordnet sind, wobei jedenfalls der Kompressor 1 und der Wärmetauscher 5 in der weiter unter erläuterten Weise an einer abgewandelten Haltekonstruktion in Form eines Rahmens 11 B gehalten sind. Während der Rahmen 11A des in Fig. 2 bis Fig. 5 erläuterten Moduls 10A ein einziges rechteckförmiges Fach mit einem Konstruktionsrahmen umgibt, sieht der abgewandelte Rahmen 11 B zwei rechteckförmige Fächer vor, die jeweils durch einen ersten rechteckförmigen Konstruktionsrahmen 11B.1 und einen zweiten rechteckförmigen Konstruktionsrahmen 11B.2 gebildet sind, wobei die Konstruktionsrahmen 11B.1 und 11B.2 an einer gemeinsamen Längsstrebe 11B.3 des Konstruktionsrahmens 11 B gemeinsam anschließen Diese Ausbildung des Rahmens 11 B in der abgewandelten Form trägt der in Bezug auf Fig. 7 erläuterten abgewandelten Antriebsform des Ladeluftniederdruckverdichters 2A über den Niederdruckturbolader 1A Rechnung und bindet diese im Modul 10B haltend ein. Beide Module 10A, 10B sehen bei der Baueinheit ein zum Auswurf führendes Abgasausgangsrohr 30 vor.

In vorteilhafter Weise kann bei einem Verfahren zur Herstellung eines Ladeluftzuführsystems und eines Abgasrückführsystems die vorliegend beschriebene Anordnung der Aufladebaueinheiten 1, 5, 6, 7 zum Aufladen einer nicht näher dargestellten Verbrennungskraftmaschine, beispielsweise in Form eines Ottomotors oder eines Dieselmotors, mit einem eine Ladeluft und Abgas umfassenden Fluid bereitgestellt werden, wobei die Aufladebaueinheiten 1, 5, 7 in dem beschriebenen Modul 10A, 10B zusammengefasst sind und über die Verbindungsstelle 3 der Kompressor 1 mit seinem ausgangsseitigen Stutzen 1.2 direkt an einen eingangsseitigen Stutzen 5.1 des ersten Wärmetauschers fluidführend - d.h. im Betriebszustand fluidführend und in der vorliegend gezeigten Form zur Fluidführung geeignet - verbunden ist. Diese somit teilweise fluidführend verbundenen bzw. konstruktiv befestigten Aufladebaueinheiten lassen sich in ihrer Anordnung an einem Rahmen 11 A, 11B zum Transport und zur Vormontage in der zuvor beschriebenen Weise anbringen, wobei der Rahmen 11A, 11 B nunmehr die Aufladebaueinheiten 1, 5, 7 in ihrer Anordnung zum Einbau in einem Motor bereits in Einbaulage festlegt. Mit der Transportvorrichtung 17 des Rahmens 11A, 11 B kann das Modul 10A, 10B von einem Vormontageplatz zu einem Endmontageplatz transportiert werden, wo das Modul 10A, 10B neben einer Verbrennungsmaschine bereitgestellt werden kann und direkt an dieser angebracht werden kann.

Dazu sieht das Modul zum einen geeignet ausgelegte Motorbefestigungen 21 als auch geeignete fluidführende Anschlüsse 23 für eine Motorperipherie vor. Vorliegend ist ein Motoranschluss 23 in Form eines motorabgasausgangsseitigen Anschlussstutzens 7.0 gebildet, der abgasstromabwärts wie zuvor erläutert, eine erste ringförmige Aufnahme 14 an der Strebe 13 des Rahmens 11A, 11B durchgreifend zum Eingangsstutzen 7.1 des zweiten Wärmetauschers 7 führt. Die Befestigungsstellen 21 sind vorliegend in Form von, z.B. an einer Verbindungsstelle zwischen Aufladebaueinheiten 1, 5, 7 oder direkt an einer Aufladebaueinheit 1, 5, 7 angebrachten Streben mit endseitigen Flanschen 25 oder Haltestreben 26 gebildet, die geeignete Öffnungen beispielsweise zur Aufnahme einer Schraubverbindung oder U-förmige Schenkel oder dgl. aufweisen.

Die Erfindung geht aus von einer, im Bauraum eines Kraftfahrzeugs anzubringenden Anordnung von Aufladebaueinheiten zum Aufladen einer Verbrennungskraftmaschine mit einem eine Ladeluft und/oder ein Abgas umfassenden Fluid, wobei die Aufladebaueinheiten wenigstens einen Wärmetauscher 5, 7 und wenigstens einen Kompressor 1 umfassen. Gemäß dem Konzept der Erfindung sind die Aufladebaueinheiten in einem Modul 10A, 10B zusammengefasst angeordnet und zum Zusammenfassen derselben im Modul sind die Aufladebaueinheiten, jedenfalls teilweise miteinander fluidführend verbunden und wenigstens eine der Aufladebaueinheiten ist an einer Haltekonstruktion gehalten. Dadurch wird ein flexibles, einfaches und dennoch Bauraum und Verbindungsaufwand sparendes Handhaben der Aufladebaueinheiten ermöglicht, insbesondere bei der Herstellung eines Ladeluft-und/oder Abgasrückführsystems.

## Patentansprüche

1. Anordnung von Aufladebaueinheiten (1, 5, 6, 7) zum Aufladen einer Verbrennungskraftmaschine mit einem eine Ladeluft und/oder ein Abgas umfassenden Fluid, wobei die Aufladebaueinheiten (1, 5, 6, 7) wenigstens einen Wärmetauscher (5, 6, 7) und wenigstens einen Kompressor (1) umfassen,
**dadurch gekennzeichnet, dass**
die Aufladebaueinheiten (1, 5, 6, 7) in einem Modul (10A, 10B) zusammengefasst angeordnet sind und zum Zusammenhalten im Modul (10A, 10B) jedenfalls teilweise miteinander fluidführend verbunden sind und wenigstens eine der Aufladebaueinheiten (1, 5, 6, 7) an einer Haltekonstruktion gehalten ist.

2. Anordnung nach Anspruch 1,
**dadurch gekennzeichnet, dass**,
in dem Modul (10A, 10B) wenigstens ein Wärmetauscher (5, 6, 7) mit wenigstens einem Kompressor (1) fluidführend verbunden ist.

3. Anordnung nach Anspruch 1 und 2,
**dadurch gekennzeichnet, dass**
alle Aufladebaueinheiten (1, 5, 6, 7) miteinander fluidführend verbunden sind.

4. Anordnung nach einem der Ansprüche 1 bis 3,
**dadurch gekennzeichnet, dass**
die Aufladebaueinheiten (1, 5, 6, 7) derart angeordnet sind, dass sie in Einbaulage Teil eines Ladeluftzuführsystems und/oder Abgasrückführsystems sind.

5. Anordnung nach einem der Ansprüche 1 bis 4,
**dadurch gekennzeichnet, dass**
wenigstens ein erster Wärmetauscher (5, 6), vorzugsweise zwei erste Wärmetauscher (5, 6) in Form eines Ladeluftwärmetauschers, insbesondere -kühlers, gebildet ist.

6. Anordnung nach Anspruch 5,
**dadurch gekennzeichnet, dass**
die zwei ersten Wärmetauscher (5, 6) als ein Zwischenkühler und ein Hochdruckkühler für eine Ladeluft gebildet sind.

7. Anordnung nach einem der Ansprüche 1 bis 6,
**dadurch gekennzeichnet, dass**
wenigstens ein zweiter Wärmetauscher (7) in Form eines Abgaswärmetauschers, insbesondere -Kühlers, gebildet ist.

8. Anordnung nach einem der Ansprüche 1 bis 5,
**dadurch gekennzeichnet, dass**
wenigstens ein Kompressor (1) in Form eines Abgasturboladers und/oder Ladeluftverdichters gebildet ist.

9. Anordnung nach einem der Ansprüche 1 bis 8,
**dadurch gekennzeichnet, dass** der Kompressor (1) einen Abgasturbolader zum Antrieb des Ladetuftverdichters aufweist.

10. Anordnung nach einem der Ansprüche 8 oder 9,
**dadurch gekennzeichnet, dass**
der Abgasturbolader (1) einen Hochdruck- und einen Niederdruck-Abgasturbolader (1A) aufweist.

11. Anordnung nach einem der Ansprüche 8 bis 10,
**dadurch gekennzeichnet, dass**
der Ladeluftverdichter einen Niederdruckverdichter (2A) und einen Hochdruckverdichter (2B) aufweist.

12. Anordnung nach einem der Ansprüche 8 bis 11,
**dadurch gekennzeichnet, dass**
ein Abgasturbolader (1) oder ein Ladeluftverdichter als eine Axial-oder Radialturbine gebildet ist.

13. Anordnung nach einem der Ansprüche 1 bis 12,
**dadurch gekennzeichnet, dass**
wenigstens eine der Aufladebaueinheiten (1, 5, 6, 7), insbesondere wenigstens ein Wärmetauscher (5, 6, 7) einen fluidführenden Anschluss (23) an die Verbrennungskraftmaschine aufweist.

14. Anordnung nach einem der Ansprüche 1 bis 13,
**dadurch gekennzeichnet, dass**
die Haltekonstruktion ein Konstruktionsteil in Form eines Rahmens (11A, 11 B) aufweist.

15. Anordnung nach einem der Ansprüche 1 bis 14,
**dadurch gekennzeichnet, dass**
ein Rahmen (11A, 11B) wenigstens ein, insbesondere zwei, rechteckförmige Konstruktionsrahmen (11B.1, 11B.2) aufweist.
